Europäisches Patentamt

European Patent Office

Office européen des brevets

(11) Veröffentlichungsnummer: **0 233 608**
A1

## EUROPÄISCHE PATENTANMELDUNG

(21) Anmeldenummer: **87102056.6**

(22) Anmeldetag: **13.02.87**

(51) Int. Cl.⁴: **F16L 41/02** , F16L 47/00 , F01P 11/04

(30) Priorität: **17.02.86 DE 3604923**

(43) Veröffentlichungstag der Anmeldung:
**26.08.87 Patentblatt 87/35**

(84) Benannte Vertragsstaaten:
**DE ES FR GB IT SE**

(71) Anmelder: **METZELER KAUTSCHUK GMBH**
**Gneisenaustrasse 15**
**D-8000 München 50(DE)**

(72) Erfinder: **Claus, Jürgen-Hasko**
**Muldenstrasse 28**
**D-6921 Ittlingen(DE)**
Erfinder: **Kahlefeld, Hermann**
**Stolperstrasse 8**
**D-6944 Hemsbach(DE)**

(74) Vertreter: **Michelis, Theodor, Dipl.-Ing.**
**Gneisenaustrasse 15**
**D-8000 München 50(DE)**

(54) **Formschlauchverzweigung, insbesondere für einen Kraftfahrzeug-Kühlwasserschlauch.**

(57) Bei einer Formschlauchverzweigung, insbesondere für einen Kraftfahrzeug-Kühlwasserschlauch, mit einem Verzweigungsrohrstück (1) aus Metall oder Kunststoff, an dessen freien Rohrstutzen (2,3,4) ausvulkanisierte Schlauchenden (10) mittels einer ausvulkanisierbaren Masse festgelegt sind, ist zur Erhöhung der Festigkeit und insbesondere zur besseren Aufnahme von Schwellbeanspruchungen erfindungsgemäß vorgesehen, daß in die freien Rohrstutzen (2,3,4) von ihrer Stirnseite her achsial verlaufende Ringspalte (5,6,7) eingelassen sind, deren Innendurchmesser mindestens gleich dem Innendurchmesser (8) des in den Ringspalt (5,6,7) einzuschiebenden Schlauchendes (10) ist, während der Außendurchmesser der Ringspalts größer als der Schlauchaußendurchmesser ist und der freie Ringraum mit einer nach dem Einspritzen ausvulkanisierten Masse (12) verfüllt ist.

EP 0 233 608 A1

## Formschlauchverzweigung, insbesondere für einen Kraftfahrzeug-Kühlwasserschlauch

Die Erfindung betrifft eine Formschlauchverzweigung, insbesondere für einen Kraftfahrzeug-Kühlwasserschlauch, mit einem Verzweigungsrohrstück aus Metall oder Kunststoff, an dessen freien Rohrstutzen ausvulkanisierte Schlauchenden mittels einer ausvulkanisierbaren Masse festgelegt sind.

Eine derartige Formschlauchverzweigung ist aus der DE-OS 32 39 623 bekannt. Danach werden auf die aufgeweiteten Enden der Rohrstutzen Schlauchabschnitte geschoben, nachdem die Rohrstutzen auf ihrer Außenseite mit einem Haftvermittler und einer vulkanisierbaren Klebermasse versehen sind. Bei der Herstellung einer derartigen Formschlauchverzweigung können sich jedoch Schwierigkeiten ergeben, da trotz der aufgeweiteten Stirnkanten der Rohrstutzen wegen der Elastizität und engen Passung der aufzuschiebenden Schlauchenden die Klebermasse auf den Rohrstutzen von den Stirnflächen der Schlauchenden beim Aufschieben weggedrückt werden kann, so daß sich oft nur eine unvollständige Haftung ergibt. Ferner können sich bei einer derartigen Verbindung Schwierigkeiten bei Schwellbeanspruchungen hohen Druckes und hoher Temperatur ergeben, da hier die Gefahr besteht, daß sich die aufgeschobenen Schläuche allmählich von den Rohrstutzen ablösen.

Der Erfindung liegt daher die Aufgabe zugrunde, eine Formschlauchverzweigung der eingangs genannten Art zu schaffen, die einfacher herzustellen ist und bei der auch bei Schwellbeanspruchungen stets eine sichere Haftung gewährleistet ist.

Zur Lösung dieser Aufgabe ist erfindungsgemäß vorgesehen, daß in die freien Rohrstutzen von ihrer Stirnseite her achsial verlaufende Ringspalte eingelassen sind, deren Innendurchmesser mindestens gleich dem Innendurchmesser des in den Ringspalt einzuschiebenden Schlauchendes ist, während der Außendurchmesser des Ringspaltes größer als der Schlauchaußendurchmesser ist und der freie verbleibende Ringraum mit einer nach dem Einspritzen ausvulkanisierten Masse verfüllt ist.

Mit einer derartigen Ausbildung und Anordnung ist sichergestellt, daß trotz geringen Montageaufwandes stets eine optimale Haftung vorhanden ist und daß insbesondere die Radialkomponente der Formänderungskraft bei Schwellbeanspruchungen vom äußeren Ring des Verzweigungsrohrstückes aufgenommen wird.

Zum Einspritzen der vulkanisierbaren Masse sind zweckmäßigerweise die Rohrstutzen mit radialen, in den Ringspalt mündenden Bohrungen versehen.

Ferner können zur besseren Haftung die Innenflächen der Ringspalte mit einer gewindeförmigen Rauhung versehen sein.

Bei einem Verfahren zur Herstellung einer derartigen Formschlauchverzweigung ist erfindungsgemäß vorgesehen, daß in achsiale Ringspalte eines Verzweigungsrohrstückes aus Metall oder Kunststoff entsprechende Schlauchenden eingeschoben und auf die Außenseite der eingeschobenen Schlauchenden eine vulkisierbare Masse eingespritzt und ausvulkanisiert wird.

Anhand einer schematischen Zeichnung sind Aufbau und Wirkungsweise von Ausführungsbeispielen nach der Erfindung näher erläutert. Dabei zeigt die einzige Figur einen Längsschnitt durch ein Verzweigungsrohrstück mit einem eingesetzten Schlauchende.

In der Figur ist als einfachstes Beispiel für eine Formschlauchverzweigung ein Schlauch mit einem einzigen Abzweig, d.h. eine T-förmige Schlauchverzweigung, gezeigt, da hieran das erfinderische Prinzip am besten erläutert werden kann. Diese T-förmige Schlauchverzweigung wird primär durch ein T-förmiges Rohrstück 1 mit den freien Rohrstutzen 2, 3 und 4 gebildet, wobei der Rohrstutzen 2, der den eigentlichen Abzweig bildet, im Winkel von 90° an die durchgehende Leitung angeschlossen ist -er kann aber auch in jedem beliebigen anderen Winkel entsprechend der geforderten Ausgestaltung des Abzweiges an die Hauptleitung angesetzt werden. Dieses Verzweigungsrohrstück 1 soll nunmehr mit einzelnen Schlauchenden dauerhaft verbunden werden, um somit eine stabile und dauerfeste Schlauchverzweigung zu bilden.

Zu diesem Zweck sind in die freien Rohrstutzen 2, 3 und 4 von ihren Stirnseiten her achsial verlaufende Ringspalte 5, 6 und 7 eingelassen, und zwar von einer Spaltbreite, die größer ist als die Wandstärke des festzulegenden Schlauches. Wesentlich ist jedoch, daß der Innendurchmesser 8 der Ringspaltes 5 mindestens gleich dem Innendurchmesser des in den Ringspalt 5 einzuschiebenden Schlauchendes 10 ist, so daß außerhalb des Schlauches 10 ein freier Ringraum verbleibt. In diesem Ringraum wird dann über eine radiale Bohrung 11 eine vulkanisierbare Masse 12 eingespritzt, die anschließend ausvulkanisiert wird und somit eine sichere Haftung und Halterung des Schlauches 10 im Ringspalt 5 sicherstellt.

Das Einspritzen der vulkanisierbaren Masse 12, die im allgemeinen aus einer Kautschukmischung entsprechend der Schlauchmischung besteht, sowie das Ausvulkanisieren erfolgt zweckmäßigerweise in einem Arbeitsgang, indem das mit den Schläuchen vormontierte Verzweigungsrohrstück in eine entsprechende Transferform eingelegt ist.

Dadurch, daß das Schlauchende 10 in einen Ringspalt 5 eingefügt ist, werden die Radialkomponenten des Innendrucks im Schlauch, die insbesondere bei Schwellbeanspruchungen sehr hoch werden können, vom äußeren Ring 13 sicher aufgenommen.

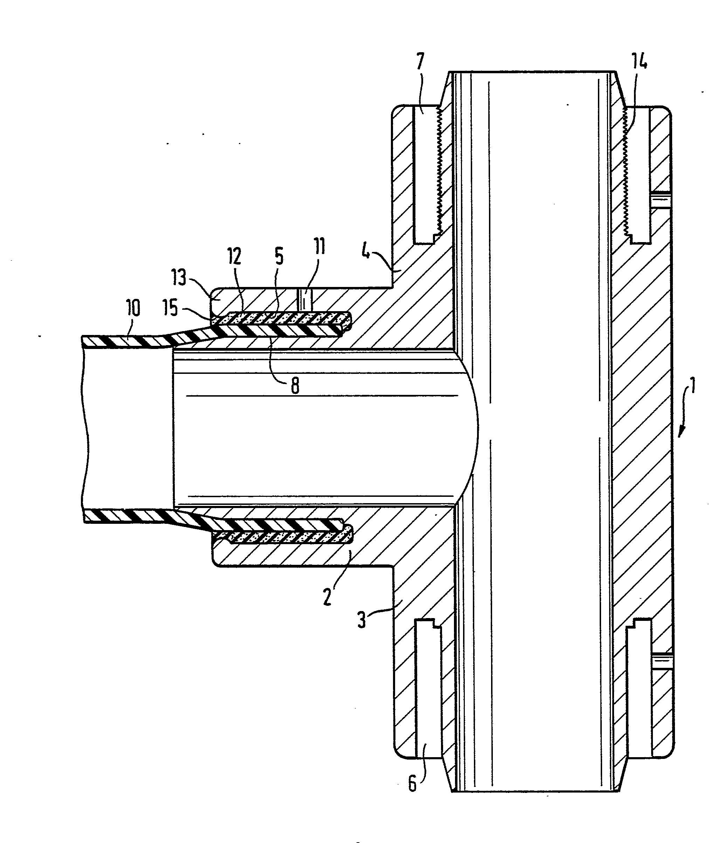

Zur Verbesserung der Abdichtung und der Haftung kann die Innenfläche des Ringspaltes mit einer gewindeförmigen Rauhung versehen sein, wie das in Fig. 1 beim Ringspalt 7 durch die gerauhte Fläche 14 dargestellt ist.

Darüber hinaus kann zur Verbesserung des Druckaufbaus im Ringspalt auf der Innenseite des äußeren Ringes 13 eine umlaufende Wulst 15 vorsehen werden.

Insgesamt ergibt sich somit eine Schlauchverzweigung, die einfach und schnell aufzubauen ist, ein geringes Handling und einen geringen Materialbedarf an Einspritzmasse erfordert. Darüber hinaus ist es nach dem gleichen Grundprinzip möglich, beispielsweise auch kreuzförmige Schlauchverzweigungen zu_schaffen, oder aber solche, bei denen an einer oder mehreren dicht nebeneinander liegen den Stellen mehrere Abzweige abgehen, wobei diese Abzweige in ein und derselben oder aber auch in mehreren Ebenen liegen und einen von 90° abweichenden Winkel zum Hauptrohr aufweisen können.

## Ansprüche

1. Formschlauchverzweigung, insbesondere für einen Kraftfahrzeug-Kühlwasserschlauch, mit einem Verzweigungsrohrstück aus Metall oder Kunststoff, an dessen freien Rohrstutzen ausvulkanisierte Schlauchenden mittels einer ausvulkanisierbaren Masse festgelegt sind, dadurch gekennzeichnet, daß in die freien Rohrstutzen (2,3,4) von ihren Stirnseiten her achsial verlaufende Ringspalte - (5,6,7) eingelassen sind, deren Innendurchmesser (8) mindestens gleich dem Innendurchmesser des in den Ringspalt (5,6,7) einzuschiebenden Schlauchendes (10) ist, während der Außendurchmesser der Ringspalte größer als der Schlauchaußendurchmesser ist und der freie Ringraum mit einer nach dem Einspritzen ausvulkanisierten Masse (12) verfüllt ist.

2. Formschlauchverzweigung nach Anspruch 1, dadurch gekennzeichnet, daß die Rohrstutzen - (2,3,4) eine radiale, in den Ringspalt (5,6,7) mündende Bohrung (11) zum Einspritzen der vulkanisierbaren Masse (12) aufweisen.

3. Formschlauchverzweigung nach Anspruch 1 oder 2, dadurch gekennzeichnet, daß die Innenfläche des Ringspaltes (5,6,7) mit einer gewindeförmigen Rauhung (14) versehen ist.

4. Formschlauchverzweigung nach Anspruch 1 bis 3, dadurch gekennzeichnet, daß auf der Außenfläche des Ring spaltes (5) in der Nähe der Stutzenstirnseite eine umlaufende Wulst (15) angeordnet ist.

5. Verfahren zur Herstellung einer Formschlauchverzweigung nach Anspruch 1, dadurch gekennzeichnet, daß in achsiale Ringspalte eines Verzweigungsrohrstückes aus Metall oder Kunststoff entsprechende Schlauchenden eingeschoben und auf die Außenseiten der eingeschobenen Schlauchenden eine vulkanisierbare Masse eingespritzt und ausvulkanisiert wird.

## EINSCHLÄGIGE DOKUMENTE

EP 87102056.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | DE - A1 - 3 512 410 (INDUSTRIAS VULCA S.A.) | | F 16 L 41/02 |
| | -- | | F 16 L 47/00 |
| A | FR - A1 - 2 502 736 (MEGIAS BERNARD) | | F 01 P 11/04 |
| | -- | | |
| A | DE - B1 - 2 921 607 (FORD WERKE AG) | | |
| | ---- | | |

RECHERCHIERTE
SACHGEBIETE (Int. Cl. 4)

F 16 L 13/00
F 16 L 33/00
F 16 L 41/00
F 16 L 47/00
F 01 P 11/00

Der vorliegende Recherchenbericht wurde für alle Patentansprüche erstellt.

| Recherchenort | Abschlußdatum der Recherche | Prüfer |
|---|---|---|
| WIEN | 11-05-1987 | SCHUGANICH |